# EUROPEAN PATENT APPLICATION

(11) **EP 1 988 448 A1**
(43) Date of publication of application: **05.11.2008**
(21) Application number: 07714854.2
(22) Date of filing: 23.02.2007
(51) Int. Cl.: G06F 3/041, G06F 3/048

(54) **OPERATION INPUT DEVICE**

(30) Priority: 23.02.2006 JP 2006046690
(71) Applicant: Pioneer Corporation, Tokyo 153-8654 (JP)
(72) Inventor: KAWAMURA, Katsuaki, Kawagoe-shi, Saitama 3508555 (JP)
(74) Representative: Haley, Stephen
(86) International application number: PCT/JP2007/053383
(87) International publication number: WO 2007/097414

(57) **Abstract**

In an operation input device enabling multi-screen display, screen display functions are not prevented with each other, and smooth operation input becomes possible, respectively. The operation input device includes a multi-screen display device such as a liquid crystal display device enabling two-screen display on a right-left or up-down side. In addition, a touch panel is provided in a display area of the multi-screen display device. Moreover, a proximity sensor unit is provided around the touch panel. The proximity sensor unit may be formed by plural proximity sensors. The proximity sensor detects fingers of a user approaching the touch panel for operation input, a touch pen and an approach direction of other operation input obj ect. The control unit limits operation input from a direction different from the detected direction. For example, when the operation input device includes a two-screen (right-left-screen) display device, if the approach of the operation input object from the right direction is detected, the control unit makes the operation input from the left direction invalid, and deletes the operation input icon on the screen displayed in the left direction.

## Description

### Technical Field

The present invention relates to a device which executes operation input with using a display device and a touch panel.

### Background Technique

There is manufactured a liquid crystal display of a multi-screen display type, capable of displaying different images in different observation directions (see Patent Reference-1, for example). When the liquid crystal display is mounted on a vehicle, a map image from a navigation device can be displayed in the observation direction of a driver seat, and an image such as a movie can be displayed in the observation direction of a front passenger seat. In addition, by arranging a touch panel on the surface of the liquid crystal display and sensing a contact position, an operation input device enabling various kinds of operation input can be formed.

As for the above-mentioned liquid crystal display device, there is known an image display method, which will be explained below, at an input time from the touch panel. The first method is that the inputtable display screens are displayed in both the directions, i.e. , the display is on the single screen. The second method is that the operation input position and the display position of the icon showing the operation input position on the screen are arranged not to be duplicated on the two screens, which makes the icon on the side of the opposite person invisible.

However, the above first method has such a problem that, since the display screen becomes single at the input time from the touch panel, the display on the side on which the touch panel is not operated cannot be executed during a constant time period.

As for the second method, since the driver and a person seated on the front passenger seat cannot see the icon position showing the operation input position on the other side with each other, they may incorrectly touch the operation icon portion on the other side, which causes incorrect input and incorrect operation.

Patent Reference-1: Japanese Patent Application Laid-open under No. 2005-78076

### Disclosure of Invention

### PROBLEM TO BE SOLVED BY THE INVENTION

The present invention has been achieved in order to solve the above problems. It is an object of this invention to enable smooth operation input in an operation input device enabling multi-screen display without inhibiting a screen display function of the other side with each other.

### Means for Solving the Problem

According to one aspect of the present invention, there is provided an operation input device including: a multi-screen display device which displays different images in different right-left or up-down directions; a touch panel which is provided on the multi-screen display device; a proximity sensor unit which is provided around the touch panel and which detects an approach direction of an operation input object approaching the touch panel for operation input; and a control unit which limits operation input to the touch panel from a direction different form a detected approach direction.

The above operation input device includes the multi-screen display device such as a liquid crystal display device enabling two-screen display in the right-left or up-down direction. Additionally, the touch panel is provided in the display area of the multi-screen display device. Further, the proximity sensor unit is provided around the touch panel. The proximity sensor unit can be formed by the plural proximity sensors, and detects the user's fingers approaching the touch panel for the operation input and the approach direction of the touch pen and the other operation input object. The control unit limits the operation input from the direction different from the detected direction. For example, in such a case that the operation input device includes the two-screen right-left display device, the operation input from the left direction is limited when the approach of the operation input object from the right direction is detected. Thereby, when the operation input object from the one direction approaches, the incorrect input from the other direction can be prevented.

In a manner of the above operation input device, the control unit may make operation input from a direction different from the detected approach direction invalid. Thereby, while the operation input object approaches from one direction, even if the operation input is executed to the touch panel from the other direction, the input is made invalid.

In another manner, the operation input device may further include an icon display unit which displays an icon showing an operation input position on the touch panel on the multi-screen display device, wherein, when the proximity sensor unit detects the approach direction of the operation input object approaching the touch panel, the icon display unit deletes an icon included in an image displayed in a direction different from the detected approach direction.

In this manner, the icon showing the operation input position on the touch panel is displayed on each screen displayed in the multi-screen display device in the ordinary state. However, when the operation input object approaches from the one direction, the icon display is deleted from the screen displayed in the opposite direction. Therefore, since the icon display is deleted from the screen, the user who sees the display screen in the opposite direction can recognize that the operation input cannot be executed, which can prevent the incorrect input.

In still another manner of the above operation input device, while the proximity sensor unit detects that the operation input object approaches the touch panel even after the operation input to the touch panel by the operation input object ends, the control unit may continue to limit the operation input. Thereby, while the operation input object exists around the touch panel even after the end of the touch panel input, the incorrect input is prevented by continuing the limit of the input from the opposite direction.

### BRIEF DESCRIPTION OF THE DRAWINGS

FIG. 1 is a block diagram schematically showing a configuration of a navigation device according to an embodiment;
FIGS. 2A and 2B are outline views of the display device;
FIGS. 3A and 3B show synthesis directivities of a proximity sensor;
FIGS. 4A to 4C show display screen examples during an operation input control process; and
FIG. 5 is a flow chart of the operation input control process.

### BRIEF DESCRIPTION OF THE REFERENCE NUMBER

- 1: Navigation device
- 10: Main body unit
- 11: Image reproduction unit
- 12: Navigation unit
- 15: Control unit
- 20: Display device
- 22: Liquid crystal display device
- 24: Touch panel
- 26: Proximity sensor

### DETAILED DESCRIPTION OF THE PREFERRED EMBODIMENTS

Now, a description will be given of a preferred embodiment of the present invention with reference to attached drawings. The explanation given below shows an example of applying the present invention to an on-vehicle navigation device.

### [Device Configuration]

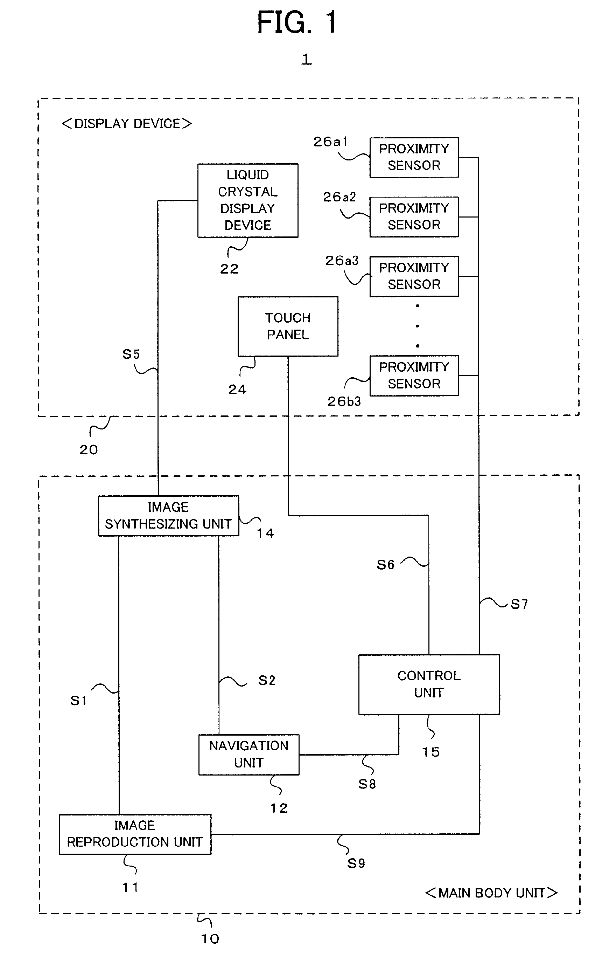

FIG. 1 shows a configuration of a navigation device 1. As shown in FIG. 1, the navigation device 1 mainly includes a main body unit 10 and a display device 20.

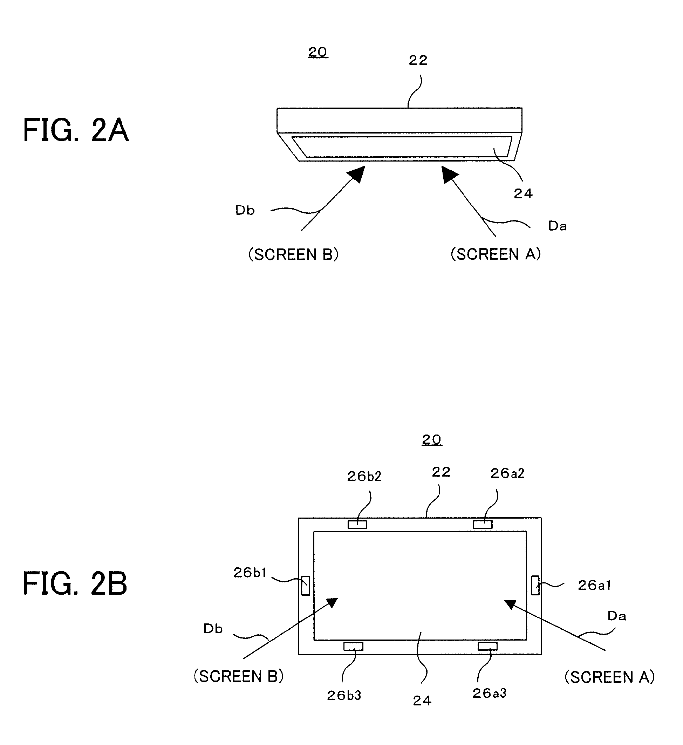

The display device 20 is a liquid crystal display device, and includes a liquid crystal display device 22, a touch panel 24 and proximity sensors 26a1 to 26a3 and 26b1 to 26b3. FIGS. 2A and 2B show outline views of the display device 20. FIG. 2A is a perspective view of the display device 20 observed from an obliquely upward direction, and FIG. 2B is a front view of the display device 20.

The liquid crystal display device 22 has a two-screen simultaneous display function capable of displaying different images when observed from the right-left direction. Concretely, in FIGS. 2A and 2B, arrows Da and Db show observation directions with respect to the display device 20, respectively. When observed from a right direction Da with respect to the display device 20, a screen A is displayed on the display device 20. Meanwhile, when observed from a left direction Db with respect to the display device 20, a screen B is displayed on the display device 20. In this embodiment, it is prescribed that the screen A displayed in the right direction Da (the driver seat side) displays a map image displayed by a navigation unit, and the screen B displayed in the left direction Db (the front passenger seat side) displays a moving picture such as a movie, for example.

The touch panel 24 is mounted on the display screen of the liquid display device 22 to cover the entire display screen of the liquid crystal display device 22. In the present invention, a contact position detecting system of the touch panel 24 is not limited.

The plural proximity sensors 26a1 to 26a3 and 26b1 to 26b3 are arranged around the display area of the liquid display device 22, i.e., around the touch panel 24. When the respective proximity sensors do not have to be discriminated from each other, the six proximity sensors are simply indicated as "proximity sensor 26" in a following explanation. The proximity sensors 26a1 to 26a3 and 26b1 to 26b3 form the proximity sensor unit. Concretely, in the example of FIG. 2B, the three sensors 26a1 to 26a3 are provided on the right side in the drawing of the liquid crystal display device 22 shown in FIG. 2B, and those three proximity sensors have the function to detect an object for operating the touch panel 24 from the right side (i.e., from the direction Da). The object for operating the touch panel 24 is a user's finger and a touch pen, for example (hereinafter also referred to as "operation input object"). Meanwhile, the three proximity sensors 26b1 to 26b3 are provided on the left side in the drawing of the liquid crystal display device 22 shown in FIG. 2B, and those three proximity sensors have the function to detect the object for operating the touch panel 24 from the left side (i.e., from the direction Db).

In this embodiment, the proximity sensor 26 is what is called a proximity sensor of an electrostatic capacity system. The proximity sensor of the electrostatic capacity system is a sensor for detecting an approaching object with using such a phenomenon that, when an object having a dielectric constant different fromthat of the atmosphere approaches a pair of electrodes, a capacity between the electrodes changes. Since the electrostatic capacity system is well known, a detailed explanation thereof is omitted here. A proximity sensor of various kinds of systems such as a high frequency oscillator system with using electromagnetic induction and a magnetic system with using a magnet, instead of the electrostatic capacity system, can be applied to the present invention.

Concretely, when the object approaches, each proximity sensor 26 outputs the voltage corresponding to the distance from the object. Thus, basically, as the proximity sensor becomes closer to the approaching object, the proximity sensor outputs the larger voltage. A detection process will be explained in details, later.

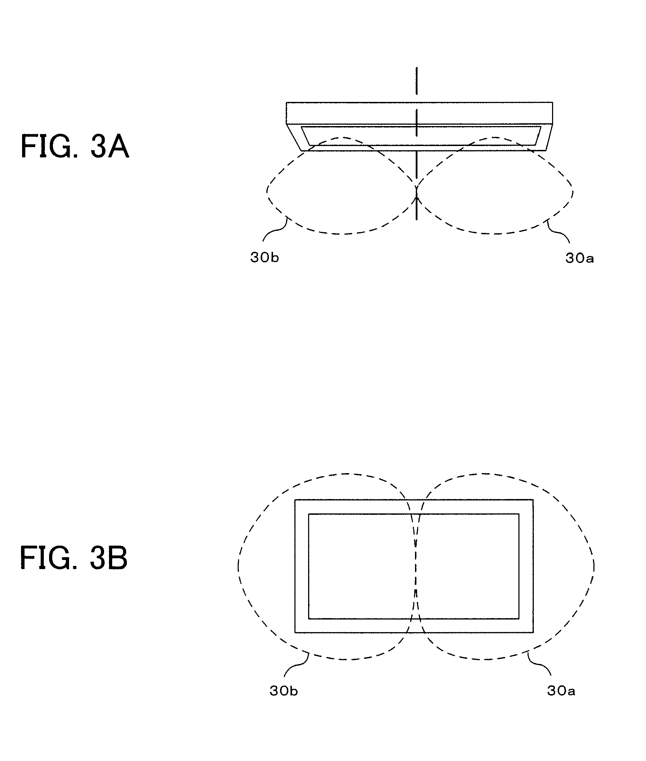

FIG. 3A is a conceptual view of a detection sensitivity directivity of the proximity sensor 26 shown in FIG. 2B, and is a perspective view observed from the upper side of the display device20. FIG. 3B is a conceptual view of the detection sensitivity directivity of the proximity sensor 26, observed from the front direction of the display device 20. In FIGS. 3A and 3B, a broken line 30a indicates the directivity of the right side of the display device 20, and a broken line 30b indicates the directivity of the left side of the display device 20. The directivity characteristics are the synthesis characteristics of the proximity sensor 26 for detecting each direction. Namely, the directivity of the right side of the display device 20, shown by the broken line 30a, is defined by the proximity sensors 26a1 to 26a3 shown in FIG. 2B, and the directivity of the left side of the display device 20, shown by the broken line 30b, is defined by the proximity sensors 26b1 to 26b3 shown in FIG. 2B.

Next, the explanation returns to FIG. 1, and a description will be given of the configuration of the main body unit 10. The main body unit 10 includes an image reproduction unit 11, a navigation unit 12, an image synthesizing unit 14 and a control unit 15. The image reproduction unit 11 reproduces the moving picture such as a movie from an image source such as a DVD. The image reproduction unit 11 may reproduce a TV signal by a TV tuner. A reproduced image signal S1 is supplied to the image synthesizing unit 14. The image reproduction unit 11 can have the same configuration as that of a DVD reproduction unit of a well-known navigation device having a DVD reproduction function.

Meanwhile, the navigation unit 12 includes a GPS unit and a map data storage unit. The navigation unit 12 generates an image signal S2 corresponding to the navigation image and supplies it to the image synthesizing unit 14. The navigation image is generally an image in which the present position of the vehicle is displayed on the map.

The image synthesizing unit 14 synthesizes the image signal S1 supplied from the image reproduction unit 11 and the image signal S2 supplied from the navigation unit 12, and generates a multi image signal S5 for two-screen display to supply it to the liquid crystal display device 22 in the display device 20. The liquid crystal display device 22 for two-screen display displays the multi image signal S5, thereby to display the navigation image in the direction Da as the screen A and to display the moving picture such as a movie in the direction Db as the screen B.

The control unit 15 totally controls each of the components in the main body unit 10. Concretely, the control unit 15 transmits control signals S9 and S8 to the image reproduction unit 11 and the navigation unit 12 in correspondence with the operation input which the user executes to the touch panel 24, and controls those units. For example, when the user watching the screen B of the movie from the direction Db executes, to the touch panel 24, the operation input such as reproduction, stop and pause of the movie, the control signal S6 corresponding to the operation input is supplied to the control unit 15. The control unit 15 correspondently supplies the control signal S9 to the image reproduction unit 11, and instructs the reproduction, the stop and the pause of the movie by the image reproduction unit 11. In addition, when the user watching the screen A of the navigation image from the direction Da executes the operation input of the navigation unit to the touch panel 24, the control signal S6 corresponding to the operation input is supplied to the control unit 15. The control unit 15 correspondently supplies the control signal S8 to the navigation unit 12, and controls the operation of the navigation unit 12.

The control unit 15 receives the output signal S7 from the plural proximity sensors 26, and detects the approach direction of the operation input object approaching the touch panel 42 for the operation input. The process will be explained in details, later.

Further, based on the approach direction of the detected operation input object, the control unit 15 supplies the control signals S9 and S8 to the image reproduction unit 11 and the navigation unit 12, and controls the display and deletion of the icon included in the image displayed on the liquid crystal display device 22. The icon is an icon (also referred to as "operation input icon") which indicates the position of the operation input on the touch panel 24 mounted on the liquid crystal display device 22. Namely, by touching the position on the touch panel 24 corresponding to the display position of the icon, the operation input corresponding to the icon is executed.

### [Operation Control]

Next, a description will be given of the operation control by the above-mentioned navigation device 1. As described above, in the display device including the liquid crystal display device 22 for two-screen display, when the user executes the operation input, the approach direction of the operation input object approaching the display device 20 is detected, and the operation input to the touch panel 24 from the direction different from the approach direction, i.e., from the direction opposite to the approach direction in this embodiment, is limited.

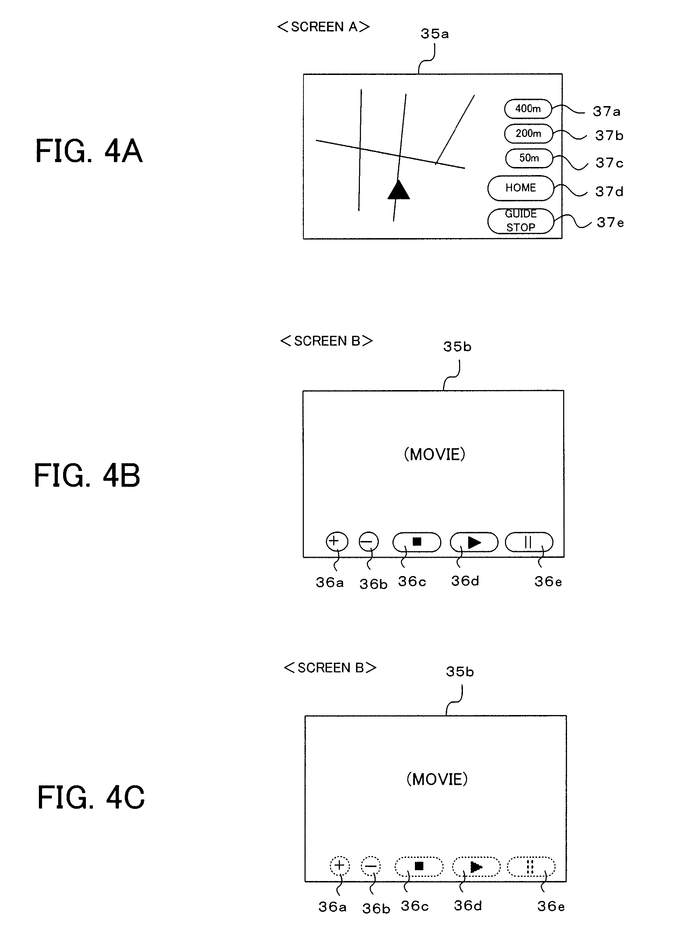

FIGS. 4A to 4C show image example displayed on the display device 20. FIG. 4A shows the navigation image 35a as an image display example of the screen A displayed in the direction Da from the driver seat. The navigation image 35a includes a map including a present position mark of the vehicle and plural operation input icons 37a to 37e. The icons 37a to 37c correspond to scale change instruction of the displayed map, and the icon 37d corresponds to route searching instruction to home. Further, the icon 37e corresponds to stop instruction of a route guide.

FIG. 4B shows the movie image 35b as an image display example of the screen B displayed in the direction Db from the front passenger seat. The movie image 35b includes operation input icons 36a to 36e associated with the movie reproduction. The icons 36a and 36b correspond to sound volume change instruction, and the icon 36c corresponds to reproduction stop instruction. Further, the icon 36d corresponds to reproduction instruction, and the icon 36e corresponds to pause instruction.

In such a situation that the navigation image 35a shown in FIG. 4A is displayed as the screen A and the movie image 35b shown in FIG. 4B is displayed as the screen B, it is assumed that the user on the driver seat executes the operation input to the icon included in the navigation image 35a. When the operation input obj ect of the user approaches the touch panel 24 of the display device 20 from the direction Da, the output of the proximity sensor 26 changes. Then, the control unit 15 detects that the operation input object approaches from the direction Da, based on the output change of the proximity sensor 26. The control unit 15 makes the operation input from the direction Db opposite to the direction Da being the approach direction of the operation input object invalid. Concretely, the control unit 15 makes the operation input executed to the position on the touch panel 24 corresponding to the icons 36a to 36e on the screen B invalid. Moreover, the control unit 15 transmits the control signal S9 to the image reproduction unit 11, and deletes the display of the operation input icons 36a to 36e of the movie image 35b reproduced from the image reproduction unit 11. FIG. 4C shows a display example of this time. The operation input icons 36a to 36e are shown by broken lines so that it is shown that the operation input icons 36a to 36e are temporarily deleted.

On the other hand, when detecting that the operation input object approaches from the direction Db, the control unit 15 makes the operation input from the direction Da invalid, and deletes the display of the operation input icons 37a to 37e included in the navigation image 35a being the screen A.

By the above-mentioned process, when the operation input object approaches from the direction Da, the operation input from the direction Db can be limited, and the erroneous operation from the direction Db can be prevented. In addition, when the operation input object approaches from the direction Da, the operation input icon on the screen B opposite to the direction Da is deleted. Therefore, it is recognized that the operation of the user on the front passenger seat does not work, which makes it possible to prevent the erroneous input.

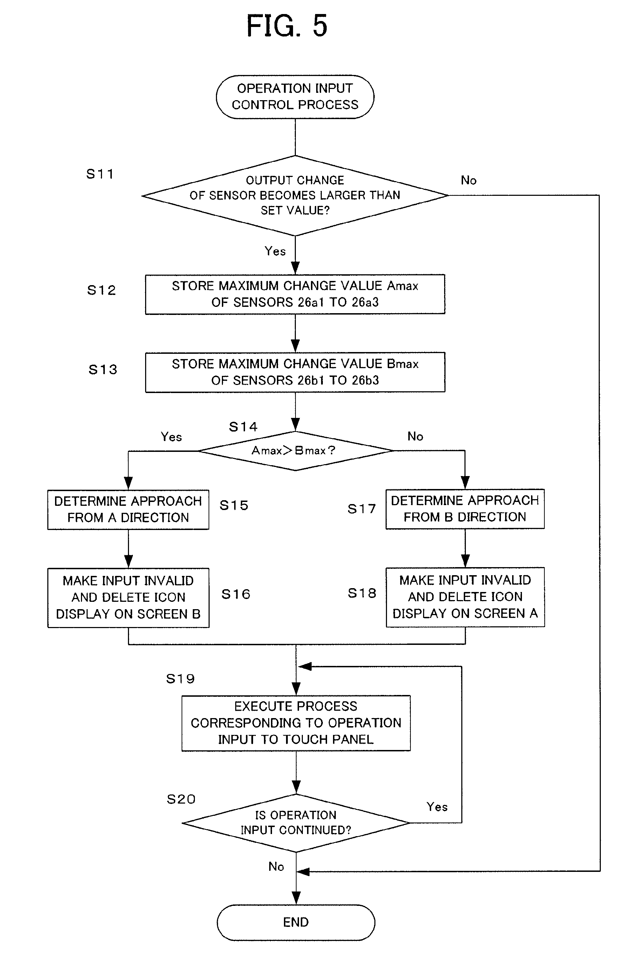

Next, a description will be given of the operation input control process. FIG. 5 shows a flow chart of the operation input control process. This process is basically executed by the control unit 15 in the main body unit 10. This process is constantly repeated in such a state that the screens A and B including the operation input icons are displayed on the display device 20 for two-screen display.

First, the control unit 15 determines whether or not the output change of the proximity sensor 26 becomes larger than the set value (step S11). In correspondence with the change of the inner inter-electrode capacitance by the approach of the operation input object, the output voltage of the proximity sensor 26 changes. The control unit 15 monitors the output signal S7 from the proximity sensor 26. When detecting the variation of the output voltage larger than the predetermined set value, the control unit 15 determines that the operation input object is approaching. The reason for the comparison with a predetermined set value is to exclude the approach of the object at such a far position that it cannot be regarded as the operation input to the touch panel 24, to remove an influence of an error cause such as temperature and humidity and to maintain the stable detection operation. The determination in step S11 may be determined "Yes" in such a case that the output change of all the six proximity sensors 26 become larger than the set value, and may be determined "Yes" in such a case that the some of the proximity sensors 26 become larger than the set value.

When the output change of each proximity sensor 26 becomes larger than the set value (step S11; Yes), the control unit 15 stores, in an inner memory and a register, the maximum change value of the proximity sensors 26a1 to 26a3 arranged in the direction Da as Amax (step S12). Further, the control unit 15 stores, in the inner memory and the register, the maximum change value of the proximity sensors 26b1 to 26b3 arranged in the direction Db as Bmax (step S13). Then, the control unit 15 compares the maximum change values Amax and Bmax (step S14).

When the maximum change value Amax is larger than Bmax (step S14; Yes), the control unit 15 determines that the operation input object is approaching from the direction Da (step S15), and limits the operation input on the screen B opposite to the direction Da. Concretely, the control unit makes the operation input on the screen B invalid, and deletes the operation input icons (step S16). Meanwhile, when the maximum change value Amax is smaller than Bmax (step S14; No), the control unit 15 determines that the operation input object is approaching from the direction Db (step S17), and limits the operation input on the screen A opposite to direction Db. Concretely, the control unit 15 makes the operation input on the screen A invalid, and deletes the operation input icon (step S18). Thereby, while the operation input object approaches, since the operation input from the opposite side is limited, the erroneous input can be prevented.

Next, when the operation input to the touch panel 24 is executed, the control unit 15 executes the correspondent process (step S19). In this case, since the operation input from the direction opposite to the direction determined in step S15 or S17 is limited in step S16 or S18, the process corresponding to the operation input from the direction detected in step S15 or S17 is executed.

Next, the control unit 15 determines whether or not the operation input to the touch panel 24 is continued (step S20). While the operation input is continued, the execution of the correspondent process is continued. Meanwhile, when the operation input ends (step S20; No), the process ends. Thereby, the limit of the operation input executed in step S16 or S18, i.e., making the operation input invalid and deleting the icon, ends.

As described above, the approach of the operation input object is detected based on the output change of the proximity sensor 26, and the operation input to the screen opposite to the approach direction is limited in this embodiment. Therefore, the erroneous input can be prevented.

In the above embodiment, when the operation input to the touch panel 24 ends in step S20, making the operation input from the opposite side invalid and deleting the icon end. Instead, even if the operation input to the touch panel 24 ends, while the detected operation input object exists within the predetermined distance from the touch panel 24, making the operation input to the opposite screen invalid and deleting the icon may be continued. In this case, even after the operation input to the touch panel 24 ends, while the output voltage of the proximity sensor 26 is larger than the predetermined set value corresponding to the above-mentioned predetermined distance, the control unit 15 determines that the operation input object exists near the touch panel 24. During the time period, the process in step S16 or S18 is continued. Then, when the output voltage of the proximity sensor 26 becomes smaller than the predetermined set value, the control unit 15 determines that the operation input object is sufficiently away from the touch panel 24, and the process in step S16 or S18 ends.

As described above, in the embodiment, the operation input device includes the liquid crystal display device for two-screen display which displays different images in the different directions, i.e., right-left or up-down, the touch panel which is provided on the liquid crystal display device, the proximity sensor which is provided around the touch panel and which detects the approach direction of the object approaching the touch panel for the operation input, and the control unit which limits the operation input to the touch panel from the direction different from the detected approach direction. By the device, even when one user tries to operate the device from the direction other than the direction in which another user tries to operate the device, the control unit makes the operation input of the other user invalid, and deletes the icon display. Thus, the user notices that he or she cannot execute the operation before touching the touch panel, which can prevent the erroneous input. In addition, each user can execute smooth operation to the display contents which he or she is looking at.

Moreover, it becomes possible that the operation input position of the different touch panels are set at the same positions of the different display screens A and B of the liquid crystal display device for two-screen display and the icon corresponding to each operation is displayed. Namely, as shown by the examples of FIGS. 4A and 4B, the icon 37e can be set to the screen A and the icon 36e can be set to the screen B at the almost same position on the touch panel 24. Thus, the necessary operation input area and the correspondent icon display can be freely set to the entire area of the screens of the liquid crystal display. Also, it becomes possible to set the large area having little erroneous operation.

### [Modification]

In the above embodiment, the present invention is applied to the display device for two-screen (i.e., right-left-screen) display, but the present invention can be applied to the display device for two-screen (i.e., up-down-screen) display, too. In the case, the proximity sensors of predetermined number are arranged on the upper side and the lower side of the display device. When it is detected that the operation input object approaches the upper side of the display device, the operation input to the lower screen is limited. Meanwhile, when it is detected that the operation input object approaches the lower side of the display device, the operation input to the upper screen is limited.

In addition, the present invention can be also applied to a display device for multi-screen display device capable of simultaneously displaying three or more different images in different directions.

### INDUSTRIAL APPLICABILITY

The present invention can be applied to an on-vehicle navigation device such as a vehicle.

## Claims

1. An operation input device comprising:
a multi-screen display device which displays different images in different right-left or up-down directions;
a touch panel which is provided on the multi-screen display device;
a proximity sensor unit which is provided around the touch panel and which detects an approach direction of an operation input object approaching the touch panel for operation input; and
a control unit which limits operation input to the touch panel from a direction different forma detected approach direction.

2. The operation input device according to claim 1, wherein the control unit makes operation input from a direction different from the detected approach direction invalid.

3. The operation input device according to claim 1, further comprising:
an icon display unit which displays an icon showing an operation input position on the touch panel on the multi-screen display device,
wherein, when the proximity sensor unit detects the approach direction of the operation input object approaching the touch panel, the icon display unit deletes an icon included in an image displayed in a direction different from the detected approach direction.

4. The operation input device according to claim 1, wherein, while the proximity sensor unit detects that the operation input object approaches the touch panel even after the operation input to the touch panel by the operation input object ends, the control unit continues to limit the operation input.
